(19) Europäisches Patentamt
European Patent Office
Office européen des brevets

(11) EP 1 802 704 B1

(12) **EUROPEAN PATENT SPECIFICATION**

(45) Date of publication and mention of the grant of the patent:
**12.11.2014 Bulletin 2014/46**

(21) Application number: **05791842.7**

(22) Date of filing: **30.09.2005**

(51) Int Cl.:
***C08J 5/18*** (2006.01) ***C08J 5/22*** (2006.01)
***C08L 79/04*** (2006.01) ***C08L 81/06*** (2006.01)

(86) International application number:
**PCT/EP2005/054937**

(87) International publication number:
**WO 2006/037756 (13.04.2006 Gazette 2006/15)**

(54) **HIGH PERFORMANCE MEMBRANES, METHODS OF MAKING, AND USES THEREOF**

HOCHLEISTUNGSFÄHIGE MEMBRANEN, HERSTELLUNGSVERFAHREN DAFÜR UND VERWENDUNG DAVON

MEMBRANES À HAUTE PERFORMANCE, PROCEDES DE FABRICATION ET UTILISATIONS DE CELLES-CI

(84) Designated Contracting States:
**AT BE BG CH CY CZ DE DK EE ES FI FR GB GR HU IE IS IT LI LT LU LV MC NL PL PT RO SE SI SK TR**

(30) Priority:
**04.10.2004 US 615023 P**
**19.10.2004 US 619694 P**
**19.10.2004 US 619695 P**
**22.12.2004 EP 04106879**
**22.12.2004 EP 04106878**
**22.12.2004 EP 04106875**
**12.04.2005 US 670266 P**

(43) Date of publication of application:
**04.07.2007 Bulletin 2007/27**

(60) Divisional application:
**10182512.3 / 2 272 915**

(73) Proprietor: **Solvay Specialty Polymers USA, LLC.**
**Alpharetta, GA 30005 (US)**

(72) Inventors:
- **UNDERWOOD, Geoffrey**
  **ATLANTA, Georgia 30319 (US)**
- **STERN, Brian A.**
  **DULUTH, Georgia 30097 (US)**
- **LIPPL, Anthony**
  **CUMMINGS, Georgia 30041 (US)**
- **WEINBERG, Shari**
  **ATLANTA, Georgia 30324 (US)**
- **SAVARIAR, Selvaraj**
  **ALPHARETTA, Georgia 30022 (US)**
- **EL-HIBRI, Mohammad Jamal**
  **ATLANTA, Georgia 30328 (US)**

(74) Representative: **Vande Gucht, Anne et al**
**Solvay S.A.**
**Département de la Propriété Industrielle**
**Rue de Ransbeek, 310**
**1120 Bruxelles (BE)**

(56) References cited:
**EP-A- 0 176 989** **EP-A- 0 215 580**
**EP-A- 0 332 012** **EP-A- 0 376 349**
**US-A- 4 051 109**

- **PATENT ABSTRACTS OF JAPAN vol. 2003, no. 09, 3 September 2003 (2003-09-03) & JP 2003 147091 A (SUMITOMO CHEM CO LTD), 21 May 2003 (2003-05-21)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 802 704 B1

## Description

The present invention relates to high-performance polymeric shaped articles which are essentially at most two-dimensional. These include essentially one-dimensional shaped articles like filaments or to high performance polymeric essentially two-dimensional shaped articles like films, sheets and slabs. It relates also to performing methods of making said shaped articles, and to end-uses of said shaped articles.

The essentially one- or two-dimensional polymeric shaped articles of the prior art may offer a poor to medium heat resistance. Yet, service requirements for numerous essentially one- or two-dimensional polymeric shaped articles include long term thermal exposure beyond 220°C, with excursions up to 300°C. Non limitative examples of essentially two-dimensional shaped articles with such service requirements include cookware-, bakeware-, CPI-, semiconductor-, automotive-, industrial, and aerospace- coatings, as well as essentially two-dimensional shaped articles for aerospace applications other than coatings. Thus, there is a need for essentially one- or two-dimensional polymeric shaped articles with an improved heat resistance.

In addition, the essentially one- or two-dimensional polymeric shaped articles of the prior art may offer a poor transparency. Among these ones are notably essentially one- or two-dimensional polymeric shaped articles made out of high-temperature crystalline polymers like aromatic polyamides. Thus, there is another need for essentially one- or two-dimensional polymeric shaped articles with an improved transparency.

In addition, the essentially one- or two-dimensional polymeric shaped articles of the prior art may be difficult to shape. For example, shaped articles made of KAPTON® resins cannot be fabricated by melt extrusion. Thus, there is another need for essentially one- or two-dimensional polymeric shaped articles with an improved processability.

In addition, the essentially one- or two-dimensional polymeric shaped articles of the prior art may offer poor to medium mechanical performances. Thus, there is another need for essentially one- or two-dimensional polymeric shaped articles with improved mechanical performances, including notably good retention of modulus at high temperature and reduced loss of mechanical properties over extended time and temperature cycles.

In addition, the essentially one- or two-dimensional polymeric shaped articles of the prior art may offer poor to medium chemical resistance to chemical agents, notably to strong acids, strong bases, aliphatic hydrocarbons and aromatic hydrocarbons, and have medium to poor hydrolytic stability. Thus, there is another need for essentially one- or two-dimensional polymeric shaped articles with improved chemical resistance.

In addition, the essentially one- or two-dimensional polymeric shaped articles of the prior art may be very expensive. Among these ones are notably shaped articles made of Kapton® resins. Thus, there is another need for high performance essentially one- or two-dimensional polymeric shaped articles at a moderate cost.

At least part, and preferably all of these needs, and possibly still other additional needs, are met by an essentially at most two-dimensional shaped article (A) comprising at least one polymer composition (C) comprising at least one high glass transition temperature sulfone polymer (P).

From a practical point of view, any shaped article is three-dimensional, and can thus be characterized notably by three characteristic dimensions ("length", "width" and "height"). However, some shaped articles are such that one or two of their characteristic dimensions is (are) considerably lower than respectively the other two ones or the third one. Here and wherever else used in the present description, the terms "considerably lower" should generally be understood as "more than 5 times lower" and preferably as "more than 10 times lower", unless they characterize a "two-dimensional thickness" as defined hereafter in the description.

Precisely, for the purpose of the present invention an essentially two-dimensional shaped article is intended to denote a shaped article of which one of its characteristic dimensions ("thickness-height") is considerably lower than its other two ones ("width" and "length"), while an essentially one-dimensional shaped article is intended to denote a shaped article of which two out of its characteristic dimensions ("thickness-width" and "thickness-height") are considerably lower than its third one ("length"). Otherwise said, from a mathematic point of view, essentially two-dimensional articles have essentially the appearance of a geometric surface, while essentially one-dimensional articles have essentially the appearance of a geometric line. Thus, an essentially two-dimensional article can be viewed as a surface (with a certain length and a certain width) differing from a geometric surface in that it has a certain non-zero thickness (typically in a direction perpendicular to the surface), said non-zero thickness being however considerably lower than the square root of the surface area developed by the surface itself and, more precisely, said non-zero thickness being considerably lower than both the length and the width of the surface itself; an essentially one-dimensional article can be viewed as a line (of a certain length) differing from a geometric line, essentially in that it has a non-zero "two-dimensional thickness" (typically in a plane perpendicular to the line, with a certain non-zero thickness-width and a certain non-zero thickness-height as characteristic dimensions), said non-zero two-dimensional thickness being however considerably lower (here specifically, the terms "considerably lower", which characterize a two-dimensional thickness, should generally be understood as "more than 25 times lower" and preferably as "more than 100 times lower") than the square of the length of the line itself, more precisely, said non-zero thickness-width and said non-zero thickness-height being both considerably lower than the length of the line itself The geometric surface can be curved or plane, twisted or untwisted ; the geometric

line can be a straight line or a curved line.

Essentially zero-dimensional articles i.e. articles having essentially the appearance of a geometric point (sometimes also referred to as "material point"), with essentially no length, no width and no height, like powdery spherical particles of polymer or powdery spherical inorganic particles coated with a polymer (with a typical diameter of a few microns), are not shaped articles within the meaning of the present invention. Thus, within the meaning of the present invention, an essentially at most two-dimensional shaped article can be either an essentially two-dimensional shaped article or an essentially one-dimensional shaped article.

The thickness of a shaped article of a regular or irregular volume is preferably defined as :

$$t = \int_V \tau(x,y,z)\, dx\, dy\, dz / V,$$

wherein x, y and z are the coordinates of an elementary volume dV (dV being equal to dx times dy times dz) of the shaped article of overall plain volume V, and $\tau$ is the local thickness.

The local thickness $\tau$, associated to a material point of coordinates (x,y,z), is defined as the length of the shortest straight line D including the material point of concern, which goes right through the shaped article (i.e. which goes from the material point where D enters the shaped article to the material point where D exits the shaped article).

For the purpose of the invention, the term "high glass transition temperature sulfone polymer" [polymer (P)] is intended to denote any polymer, of which more than 50 wt. % of the recurring units are recurring units (R1) chosen from :

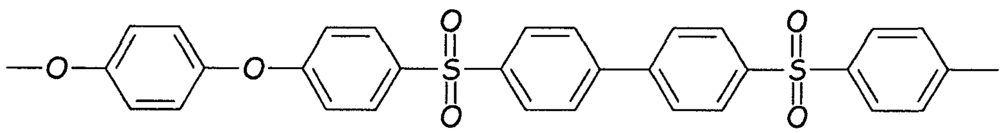

**(i)**

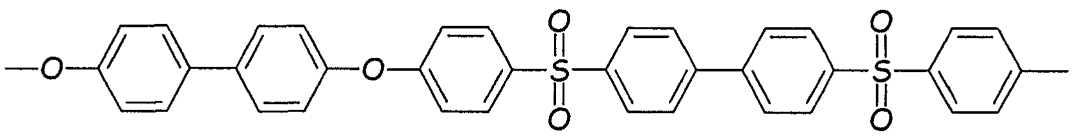

**(ii)**

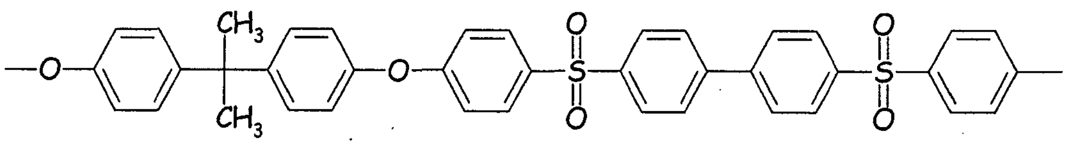

**(iii)**

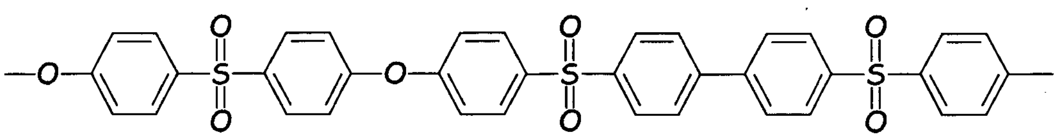

**(iv)**

and mixtures thereof

More preferably, recurring units (R1) are recurring units :

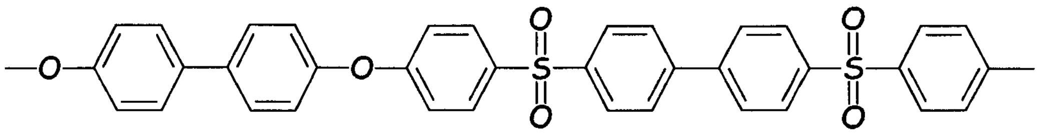

**(ii)**

In a particular embodiment of the invention, polymer (P) further comprises recurring units (R2) :

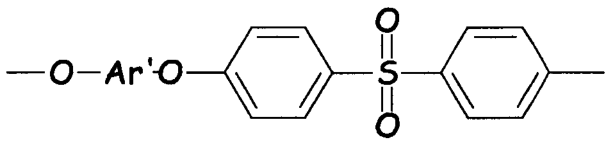

**(R2)**

wherein Ar' is chosen among :

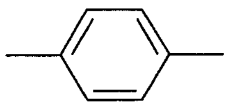 , 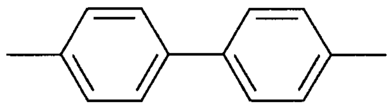 ,

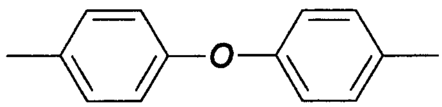 , 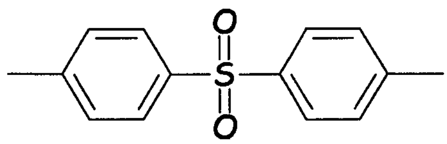 ,

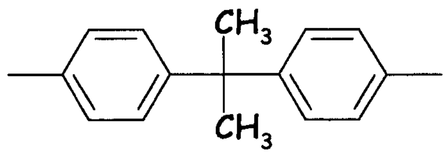

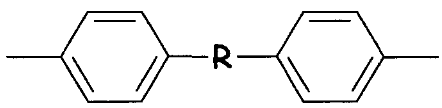 ,

with R being an aliphatic divalent group of up to 6 carbon atoms, such as methylene, ethylene, isopropylene and the like [polymer (P*)].

Recurring units (R2) are preferably chosen from :

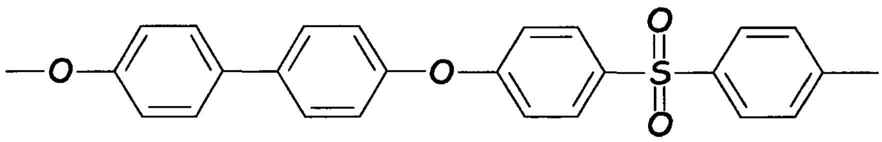

(j)

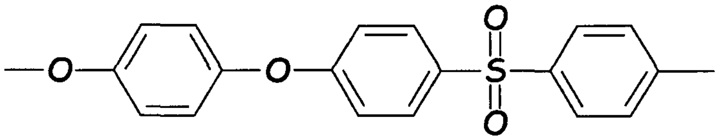

(jj)

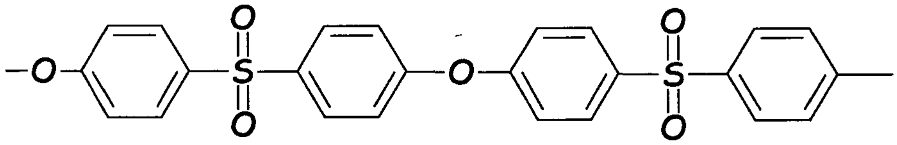

(jjj)

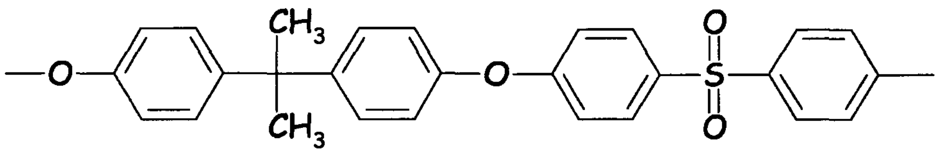

(jv)

and mixtures thereof

Polymer (P*) may notably be a random, alternating or block copolymer. Preferably, it is a block copolymer.

Advantageously, polymer (P) is chosen from polymers other than block copolymers comprising at least one block of a polymer comprising at least 50 mole % of recurring units formed by the polymerization of at least one alkylene oxide.

Polymer (P) comprises preferably more than 70 wt. %, and more preferably more than 90 wt. % of recurring units (R1). Still more preferably, all the recurring units of polymer (P) are recurring units (R1).

Excellent results are obtained with polymers (P) which are homopolymers the recurring units of which are recurring units (ii).

A polymer the recurring units of which are recurring units (ii) can be advantageously manufactured by the polycondensation reaction between 4,4'-bis[(4-chlorophenylsulfonyl)-1,1'-biphenyl and biphenol.

Polymer (P) has a glass transition temperature advantageously of at least about 240°C, and preferably of at least about 250°C. In addition, polymer (P) has a glass transition temperature of advantageously at most about 275 °C.

Polymer (P) is advantageously amorphous.

Polymer (P) exhibits advantageously a high compatibility with other high temperature polymers other than polymer (P).

Polymer (P) has advantageously matched thermal (e.g. CLTE, decomposition) characteristics, benefiting notably coating application.

Polymer composition (C) can consist of a sole ingredient [the case being, polymer (P)] or of several ones. In addition to polymer (P), polymer composition (C) may further comprise notably other polymers than polymer (P), fillers and conventional ingredients of sulfone polymer compositions such as stabilizers, i.e., metal oxides such as zinc oxide, antioxidants and flame retardants.

Should the polymer composition comprise at least two ingredients, it is advantageously prepared by any conventional mixing method. A preferred method comprises mixing polymer (P) and the optional ingredients in powder or granular form in an extruder and extruding the mixture into strands and chopping the strands into pellets.

Polymer composition (C) has at least one glass transition temperature advantageously of at least about 240°C, and preferably of at least about 250°C. In addition, polymer composition (C) has at least one glass transition temperature of advantageously at most about 275 °C.

Polymer composition (C) is one comprising more than 80 wt. % of polymer (P) [polymer composition (C1)]. Polymer composition (C1) comprises more preferably more than 95 wt. % of polymer (P). Still more preferably, polymer composition (C1) consists essentially of, or even consists of, polymer (P).

In another embodiment of the present invention, a preferred polymer composition (C) is one further comprising at least one polymer (P2) chosen from polyetherimides, polysulfones, polyethersulfones, polyphenylsulfones, polyetherethersulfones, and copolymers and mixtures thereof [polymer composition (C2)].

For the purpose of the invention, the term "polyetherimide" is intended to denote any polymer, of which more than 50 % wt of the recurring units are recurring units (R3), comprising two imide groups as such (R3-A) and/or in their corresponding amic acid forms [(R3-B) and (R3-C)]:

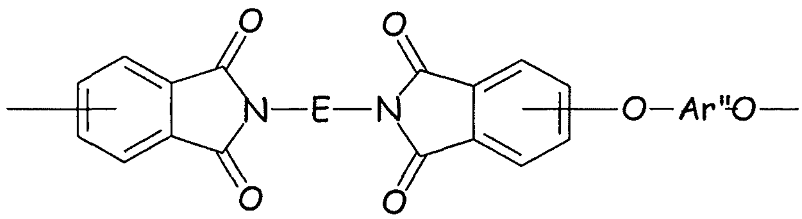

**(R3-A)**

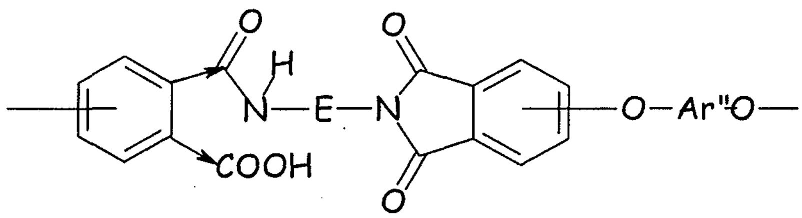

**(R3-B)**

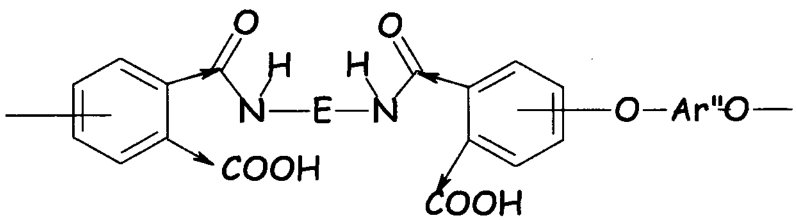

**(R3-C)**

wherein :

- the → denotes isomerism so that in any recurring unit the groups to which the arrows point may exist as shown or in an interchanged position;
- E is typically:

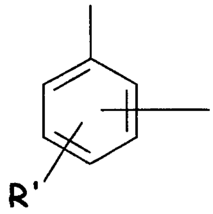

with **R'** being a hydrogen atom or an alkyl radical comprising from 1 to 6 carbon atoms ;

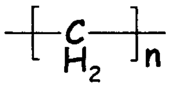

with n = integer from 1 to 6 ;

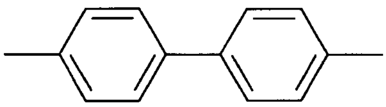 ; 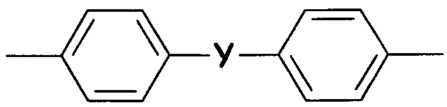

with Y being:

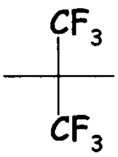 , 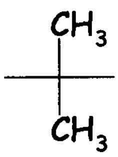 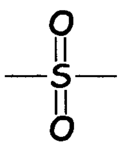 , 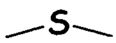 , 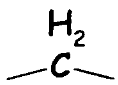 , 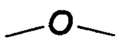 ,

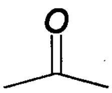 , 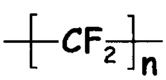 , 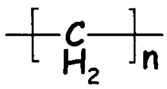

with n = integer from 1 to 6 ;
- Ar" is typically :

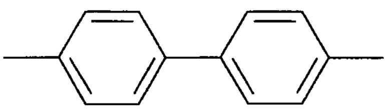 ; 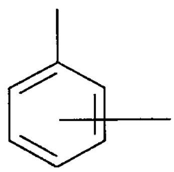 ;

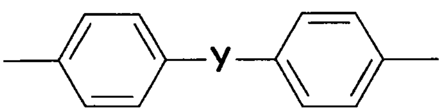

with **Y** being:

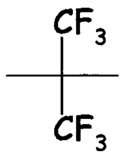 , 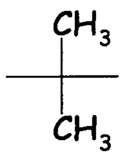 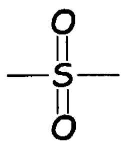 ,

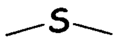 , 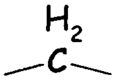 , 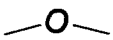 , 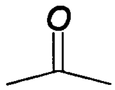 , 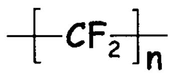 , 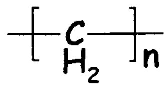

with n = integer from 1 to 6.

Recurring units (R3) are preferably recurring units (k), in imide form (k-A) and/or in amic acid forms [(k-B) and (k-C)] :

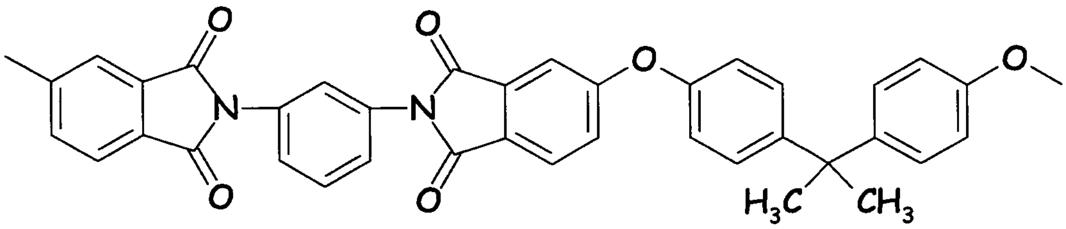

**(k-A)**

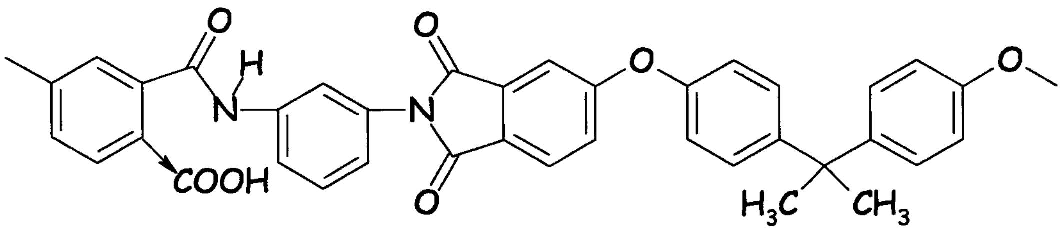

**(k-B)**

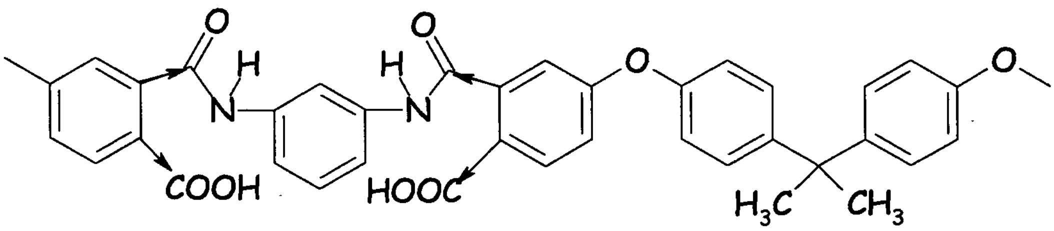

**(k-C)**

wherein in formulae (k-B) and (k-C) the → denotes isomerism so that in any recurring unit the groups to which the arrows point may exist as shown or in an interchanged position.

For clarity, the structural repeat units of polyphenylsulfone, polysulfone, polyethersulfone, and polyetherethersulfone are listed below : Polyphenylsulfone (PPSF)

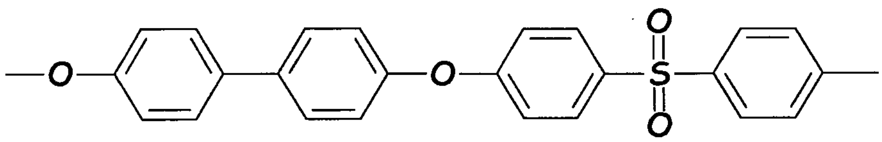

(j)

Polyetherethersulfone (PEES)

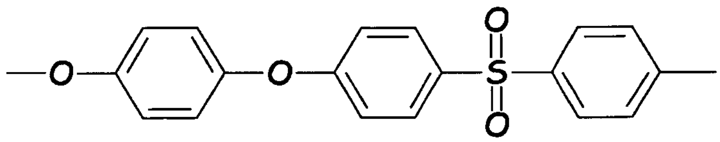

(jj)

Polyethersulfone (PES)

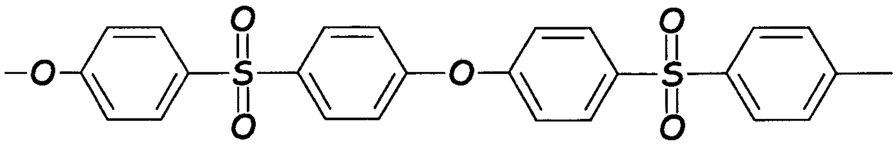

(jjj)

and/or
mixtures of **(jj)** and **(jjj)**
Polysulfone (PSF)

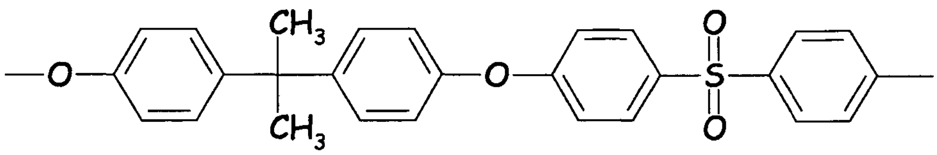

(jv)

Polyphenylsulfone is available as RADEL® R PPSF from Solvay Advanced Polymers, L.L.C.. Polysulfone is available as UDEL® PSF from Solvay Advanced Polymers, L.L.C.. Polyethersulfone is available as RADEL® A PES from Solvay Advanced Polymers, L.L.C.. Polyetherethersulfone (jj) is the polymer formed from the polycondensation of 4,4'-dihalodiphenylsulfone and hydroquinone.

Polymer composition (C2) comprises advantageously polymer (P) as main polymer [i.e., in polymer composition (C2), the weight fraction of polymer (P) is greater than or equal to the weight fraction of polymer (P2)]. Polymer composition (C2) comprises preferably more than 40 wt. %, and more preferably more than 50 wt. % of polymer (P). Besides, polymer composition (C2) comprises advantageously less than 80 wt. %, and preferably less than 70 wt. % of polymer (P).

Still in another embodiment of the present invention, a preferred polymer composition (C) is one further comprising at least one filler [polymer composition (C3)].

Non limitative examples of suitable fillers include flake, spherical and fibrous particulate reinforcement fillers and nucleating agents such as talc, mica, titanium dioxide, potassium titanate, silica, kaolin, chalk, alumina, mineral fillers, and the like. Other suitable fillers include notably glass fiber, carbon fiber, graphite fiber, fibers formed of silicon carbide, alumina, titania, boron and the like, and may include mixtures comprising two or more such fibers.

Polymer composition (C3) comprises preferably at least one fibrous filler. Very preferably, it comprises glass fiber.

The weight amount of filler comprised in polymer composition (C3) is advantageously at least 5 wt. %, and preferably at least 20 wt. % based on the total weight of the polymer composition. Besides, it is advantageously at most 40 wt. %, and preferably at most 30 wt. % based on the total weight of the polymer composition.

Polymer composition (C3) comprises preferably more than 50 wt. % of polymer (P). Still more preferably, polymer composition (C3) comprises preferably more than 75 wt. % of polymer (P).

Optionally, polymer composition (C3) may further comprise at least one polymer (P2) chosen from polyetherimides, polysulfones, polyethersulfones, polyphenylsulfones, polyetherethersulfones, and copolymers and mixtures thereof, as above defined.

Shaped article (A) consists of, polymer composition (C).

Shaped article (A) is capable of working at a use temperature of advantageously at least 200°C, preferably at least 220°C. In addition, shaped article (A) is capable of working at a use temperature of advantageously at most 270°C, preferably at most 250°C.

A first preferred shaped article (A) is essentially two-dimensional [shaped article (A1)].

The thickness t of shaped article (A1) complies preferably with the relationship :

$$t < (V/k^2)^{1/3} \qquad \text{[ which is equivalent to } V > (k.t) . (k.t) . t \text{ ]} \qquad \text{(rel-1)}$$

wherein V is the overall plain volume of the shaped article and k is equal to 10, t is expressed in mm and V is expressed in $mm^3$.

The thickness t of shaped article (A1) complies very preferably with above relationship (rel-1), except k is now equal to 100.

In addition, the thickness t of shaped article (A1) complies preferably with the relationship :

$$t < (S/2)^{1/2} / k \qquad \text{[ which is equivalent to } S > 2 . (k.t) . (k.t) \text{ ]} \qquad \text{(rel-2)}$$

wherein S is the overall surface area developed by the shaped article, k is equal to 10, t is expressed in mm and S is expressed in $mm^2$.

The thickness t of shaped article (A1) complies very preferably with above relationship (rel-2), except k is now equal to 100.

In a first preferred variation of shaped article (A1), shaped article (A1) is chosen from articles having a thickness lower than 500 $\mu$m [shaped article (A1-1)]. Shaped article (A1-1) is commonly referred to as a film. Shaped article (A1-1) has a thickness of preferably less than 250 $\mu$m. Shaped article (A1-1) has a thickness of preferably more than 5 $\mu$m.

Shaped article (A1-1) complies preferably with relationship (rel-1) in which k has been changed to 1000. Very preferably, it complies with relationship (rel-1) in which k has been changed to 10000.

Shaped article (A1-1) is preferably flexible. It is sometimes very preferred that article (A1-1) can be flexed in such a way that it can get the appearance of a parallelepiped rectangle-like volume the thickness of which is considerably lower than its length and its width ; roughly speaking, it looks then like a "plane with an extremely low thickness".

Shaped article (A1-1) can be an uncoated film.

Alternatively, shaped article (A1-1) can be a film coated on an essentially two- or on a three-dimensional substrate. The essentially two- or the three-dimensional substrate can be notably a fabrics, a polymeric film free of polymer (P), a sheet of paper, a wood or a metal component.

As coated film, shaped article (A1-1) is advantageously few sensitive to interfacial segregation and delamination failure. In addition, it has advantageously a long-term thermal stability. These good properties are usually achieved notably because of the high glass transition temperature of polymer (P). Further, as coated film, shaped article (Al-1) has advantageously excellent retention of beneficial coating morphology versus coated films on the prior art, especially those made from a semi-crystalline polymer.

An embodiment of article (A1-1) is one wherein the substrate is a metal component.

Another embodiment of article (A1-1) is one wherein the substrate differs from a metal component. According

to this embodiment, preferred substrates are fabrics, end polymeric films free of polymer (P).

In a second preferred variation of shaped article (A1), shaped article (A1) is chosen from shaped articles having a thickness from 500 $\mu$m to 5000 $\mu$m [shaped article (A1-2)].

Shaped article (A1-2) has preferably the appearance of a parallelepiped rectangle-like volume the thickness of which is considerably lower than its length and its width ; roughly speaking, it looks then like a "plane with a very low thickness". Then, shaped article (A1-2) is commonly referred to as a sheet.

In a third preferred variation of shaped article (A1), shaped article (A1) is chosen from shaped articles having a thickness above 5000 $\mu$m [shaped article (A1-3)].

Shaped article (A1-3) has preferably the appearance of a parallelepiped rectangle-like volume the thickness of which is considerably lower than its length and its width ; roughly speaking, it looks then like a "plane with a low thickness". Then, shaped article (A1-3) is commonly referred to as a slab.

Shaped article (A1-3) is advantageously rigid.

In a fourth preferred variation of shaped article (A1), shaped article (A1) is a hollow body [shaped article (A1-4)].

The thickness of the walls of shaped article (A1-4) is advantageously equal to the thickness t of shaped article (A1-4).

Shaped article (A1-4) has a thickness t of preferably at least 250 $\mu$m, more preferably at least 500 $\mu$m.

Shaped article (A1-4) has a thickness t of preferably at most 5000 $\mu$m, more preferably at most 2500 $\mu$m.

A second preferred shaped article (A) is essentially one-dimensional [shaped article (A2)].

Shaped article (A2) has a thickness t which is preferably lower than 10 mm, more preferably less than 250 $\mu$m, still more preferably less than 50 $\mu$m, and the most preferably less than 10 $\mu$m.

The thickness t of shaped article (A2) complies preferably with the relationship :

$$t < (V/k')^{1/3} \qquad \text{[which is equivalent to } V > (k'.t)\,.\,t\,.\,t\,] \qquad \text{(rel-3)}$$

wherein k' is equal to 10, V as above defined, t is expressed in mm and V is expressed in $mm^3$.

The thickness t of shaped article (A2) complies very preferably with above relationship (rel-3), except k' is now equal to 100.

The thickness t of shaped article (A2) complies still more preferably with above relationship (rel-3), except k' is now equal to 1000.

The thickness t of shaped article (A2) complies the most preferably with above relationship (rel-3), except k' is now equal to 10000.

In addition, the thickness of shaped article (A2) complies preferably with the relationship :

$$t < (S/k')^{1/2} / 2 \qquad \text{[which is equivalent to } S > 4\,.\,(k'.t)\,.\,t\,] \qquad \text{(rel-4)}$$

S as above defined, k'is equal to 10, t is expressed in mm and S is expressed in $mm^2$.

The thickness t of shaped article (A2) complies very preferably with above relationship (rel-4), except k' is now equal to 100.

The thickness t of shaped article (A2) complies still more preferably with above relationship (rel-4), except k' is now equal to 1000.

The thickness t of shaped article (A2) complies the most preferably with above relationship (rel-4), except k' is now equal to 10000.

In a first preferred variation of shaped article (A2), shaped article (A2) has the appearance of a cylinder-like plain volume the diameter of which is considerably lower than its length ; roughly speaking, it looks then like a "straight line with an extremely low diameter" [shaped article (A2-1)]. Shaped article (A2-1) is commonly referred to as a filament.

For certain variations of shaped article (A2), in particular when shaped article (A2) is a filament, good results can be obtained notably when shaped article (A2) consists essentially of, or even consists of, polymer composition (C).

In a second preferred variation of shaped article (A2), shaped article (A2) is a coating coated on an essentially one-dimensional substrate, like an inorganic fiber, a polymeric fiber free of polymer (P) or a metal [shaped article (A2-2)]. Shaped article (A2-2) has then preferably the appearance of a circular crown surrounding a cylinder-like plain volume composed by the essentially one-dimensional substrate, the thickness of the crown being considerably lower than the length and the diameter of the cylinder-like plain volume.

The thickness t of shaped article (A2-2) is still more preferably less than 50 $\mu$m, and the most preferably less than 10 $\mu$m. Besides, it is advantageously lower than the diameter of the essentially one-dimensional substrate.

Shaped article (A2-2) is advantageously few sensitive to interfacial segregation and delamination failure. In addition, it has advantageously a long-term thermal stability. These good properties are usually achieved notably because of the high glass transition temperature of polymer (P).

An embodiment of article (A2-2) is one wherein the substrate is a metal, in particular a metal electrical wire. Composition (C), and more particularly polymer (P), act then usually as insulating agent. Electrical insulation could be achieved notably through an article (A2-2) coating a conductive metal device.

Another embodiment of article (A2-2) is one wherein the substrate differs from a metal. According to this embodiment, preferred substrates are inorganic fibers, and polymeric fibers free of polymer (P).

In addition, electrical insulation applications can require continuous use temperatures in the 200-250°C range. Examples of such insulations include dry power distribution transformers, aerospace wire insulation, and motor windings. In order to qualify materials for such applications, accelerated testing must be done at temperatures ranging from 220-270°C which is much higher than the slated use temperatures.

Other aspects of the present invention concern performing methods of making shaped article (A) as above described.

In this regard, the invention concerns a method of making shaped article (A) as above described, which comprises liquefying polymer (P) [method (M1)].

"Liquefying polymer (P)" means causing polymer (P) to become liquid or fluid. Liquefying can be achieved by any technique known by the skilled person.

According to method (M1), polymer (P) is advantageously in the form of powder or of granules.

According to a first preferred embodiment of method (M1) [method (M1-1)], liquefying polymer (P) is achieved through melting polymer (P) under the action of heat.

Method (M1-1) comprises advantageously extruding polymer (P), or more generally, polymer composition (C).

According to a second preferred embodiment of method (M1) [method (M1-2)], liquefying polymer (P) is achieved through solvent casting.

As a non limitative example of suitable solvent, n-methyl pyrrolidone can be cited.

According to method (M1-2), a composition (X) comprising a solvent of polymer (P) and polymer (P) in dissolved state is usually prepared.

Composition (X) may optionally comprise notably inorganic additives. Said inorganic additives are usually not soluble in the solvent, and thus not in dissolved state in composition (X).

Composition (X) may also optionally comprise notably organic additives. Said organic additives may be or not soluble in the solvent, and thus respectively in dissolved state or not in composition (X).

The application of composition (X) on the substrate can be achieved by any known technique. It is preferably achieved through immersion, liquid spray and/or coating, in particular roller-, dip-, spin- and/or curtain-coating.

The invention concerns also a method of making shaped article (A) as above described, which comprises applying on a substrate, a composition (Y) comprising polymer (P) in dispersed state and a dispersion liquid of polymer (P) [method (M2)].

The dispersion liquid includes advantageously water. Preferably, it consists of water.

The application of composition (Y) on the substrate can be achieved by any known technique. It is preferably achieved through immersion, liquid spray and/or coating, in particular roller-, dip-, spin- and/or curtain-coating.

Composition (Y) can be notably a slurry or a latex.

For the purpose of the present invention, a slurry is intended to denote a composition comprising polymer (P) in the form of particles having an average diameter in weight ranging from about 3 to about 300 $\mu$m, and at least one dispersing agent such as a polyvinyl alcohol. The slurry may further comprise at least one emulsifying agent such as a cationic, an anionic or a non ionic surfactant.

For the purpose of the present invention, a latex is intended to denote a composition comprising polymer (P) in the form of particles having an average diameter in weight ranging from about 0.03 $\mu$m to about 3 $\mu$m, and at least one emulsifying agent. The latex may further comprise at least one dispersing agent. In case of a latex, the dispersion of the particles of polymer (P) in the dispersion liquid is usually stable as a function of time ; the wording "emulsion" is commonly used to refer to such stable dispersion.

According to a first preferred embodiment of method (M2) [method (M2-1)], composition (Y) is a slurry.

According to a second preferred embodiment of method (M2) [method (M2-2)], composition (Y) is a latex.

The invention concerns also a method of making shaped article (A) as above described, which comprises applying on a substrate, polymer (P) in powder form or, more generally, polymer composition (C) in powder form [method (M3)].

According to method (M3), the application of polymer (P) or of polymer composition (C) on the substrate can be achieved by any known technique. It is preferably achieved through powder spray.

Still another aspect of the present invention concerns a high-performance semi-finished or finished multi-component article.

In this regard, the present invention concerns also a semi-finished or finished multi-component article (B) comprising at least one component consisting of shaped article (A) as above described or prepared by method (M) as above described.

Article (B) can be any semi-finished or finished multi-component article which includes advantageously a component consisting of a high-performance shaped article.

A first preferred article (B) is one comprising a substrate coated with a shaped article (A) which is a film coated on an essentially two- or a three-dimensional substrate.

A second preferred article (B) is one comprising an essentially one-dimensional substrate coated with a coating [essentially one-dimensional shaped article (A)].

A third preferred article (B) is a membrane.

The membrane can be used for any suitable purpose.

According to a first preferred use, the membrane is used for purifying a liquid, preferably impure water or blood, more preferably water.

According to a second preferred use, the membrane is used for separating gases.

The invention will be further understood with reference to the following non-limiting examples.

__Example__ 1

A 10 wt. % polymer solid solution was prepared by charging 10g of a polymer the recurring units of which consist of

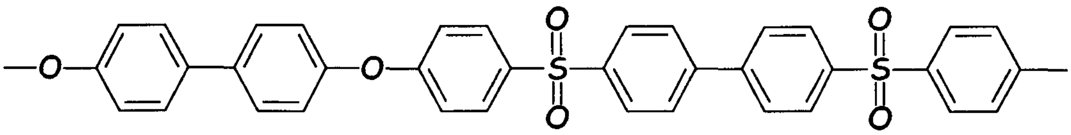

into a 250 ml round bottom flask containing 90 g of n-methyl pyrrolidone. The flask was fitted with stirring paddle and heating mantel and the mixture was heated to 80°C under moderate stirring (300 rpm). After 2 hours the polymer had completely dissolved, yielding a straw golden solution with a viscosity of about 1000 centipoises at 40°C. This solution was used to produce 1 mil (25.4 μm) coatings on a substrate using a 10 mil (254 μm) clearance drawn down bar (doctor blade). The coating was cured at 150°C for 15 minutes, then 200°C for 15 minutes and finally 250°C for 15 minutes to produce a tough, transparent film. The film had a pencil hardness of 4H and passed a cross-hatch adhesion test (Score = 5).

__Example 2__

A dispersion is prepared. To this end, 10-40 % of ground polymer the recurring units of which consist of

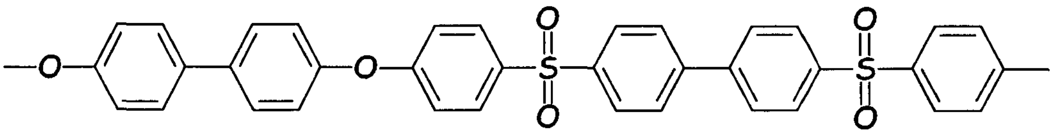

, with an average particle size in weight in the range of 3-30 μm, 1-10 wt. % portion of a non white pigment, 50-80 wt., 1-5 wt. % of an emulsifying agent and 1-5 wt. % of a dispersing agent are ball milled for 24 hours. The dispersion coating is sprayed using conventional techniques onto metal substrates. The coating is cured at 150°C for 15 minutes, then 250°C for 15 minutes and finally 300°C for 15 minutes to produce a tough, transparent film. The film has a pencil hardness of 4H and passed a cross-hatch adhesion test (Score = 1).

__Example 3__

Films were made from 10 lots of a resin of a polymer the recurring units of which consist of

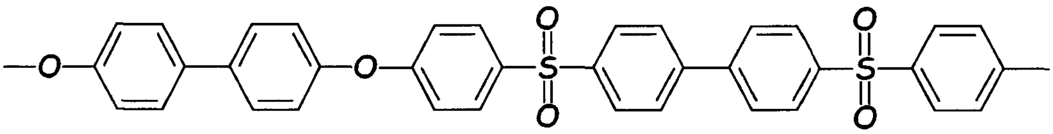

, with glass transition temperatures ranging from 259.4 to 262.1°C. The reduced viscosity of the various lots ranged from 0.33 to 0.43. The melt flow of the various lots ranged from 15.5 to 26.4.

Said resins were dried in a dehumidifying oven at 150°C overnight for approximately 16 hours. Then, the resins were extruded into films using a 25 mm Optical Control Systems Model 20/26 Extruder with a 10.16 cm wide die. The heat zones were all set at 385°C to achieve a melt of approximately 380°C, and the extruder screw was rotated at 15 rpm. A film was cast onto two sequential chill rolls the first maintained at 215°C and the other at 210°C. The film was taken up at approximately 2 m/min and was about 8.25 cm wide and 50 microns thick. The throughput was approximately 2.25 kg/hr.

## Claims

1. Essentially at most two-dimensional shaped article (A1) having a thickness lower than 500 μm and consisting of a polymer composition (C) comprising more than 80 wt. % of at least one high glass transition temperature sulfone polymer (P), where polymer (P) is a polymer of which more than 50 wt. % of the recurring units (R1) are chosen from:

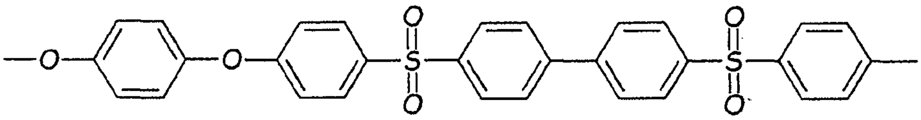

(i)

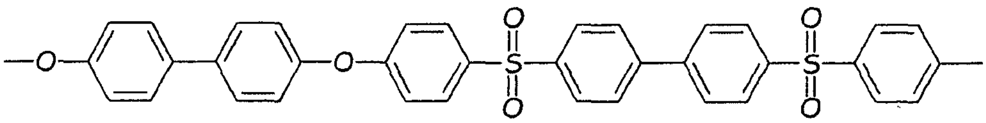

(ii)

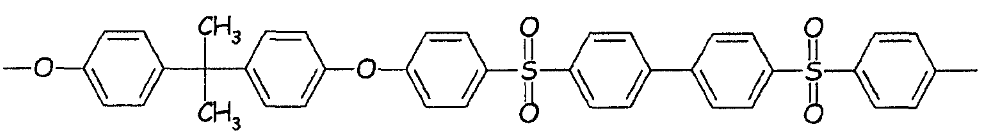

(iii)

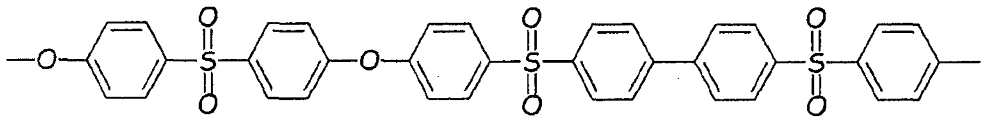

(iv)

and mixtures thereof.

2. Shaped article according to claim 1, **characterized in that** recurring units (R1) are recurring units :

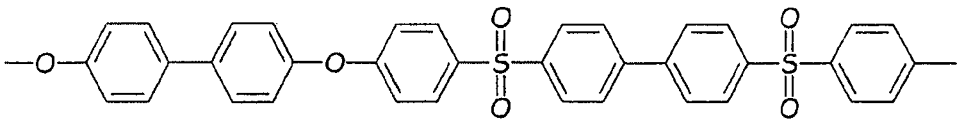

(ii)

3. Shaped article according to claim 1 or 2, **characterized in that** polymer composition (C) consists essentially of polymer (P).

4. Shaped article according to claim 1 or 2, **characterized in that** polymer composition (C) further comprises at least one polymer (P2) chosen from polyetherimides, polysulfones, polyethersulfones, polyphenylsulfones, polyetherethersulfones, and copolymers and mixtures thereof.

5. Shaped article according to claim 1, 2 or 4, **characterized in that** polymer composition (C) further comprises at least one fibrous filler.

6. Shaped airticle according to anyone of the preceding claims, **characterized in that** it consists essentially of polymer composition (C).

7. Shaped article according to anyone of the preceding claims, **characterized in that** it is a film.

8. Shaped article according to claim 7, **characterized in that** the film is coated on an essentially two- or a three-dimensional substrate.

9. Shaped article according to claim 7, **characterized in that** it is a sheet or a slab.

10. Use of a shaped article according to any of the preceding claims, in an application including long term thermal exposure beyond 220°C, with excursions up to 300°C.

11. Use according to claim 10, wherein the application is chosen from cookware-, bakeware-, , semiconductor-, automotive-, industrial, and aerospace- coatings, as well as essentially two-dimensional shaped articles for aerospace applications other than coatings.

**Patentansprüche**

1. Im Wesentlichen höchstens zweidimensionaler Formkörper (A1), der eine Dicke von weniger als 500 μm aufweist und aus einer Polymerzusammensetzung (C) besteht, die mehr als 80 Gew.-% mindestens eines Sulfonpolymers (P) mit hoher Glasübergangstemperatur umfasst, wobei es sich bei dem Polymer (P) um ein Polymer handelt, bei dem mehr als 50 Gew.-% der Wiederholungseinheiten (R1) aus :

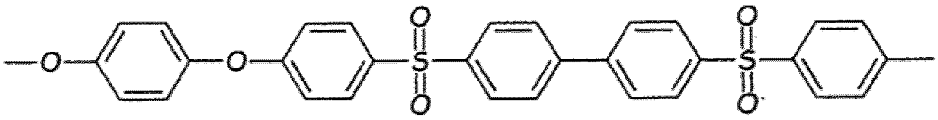

(i)

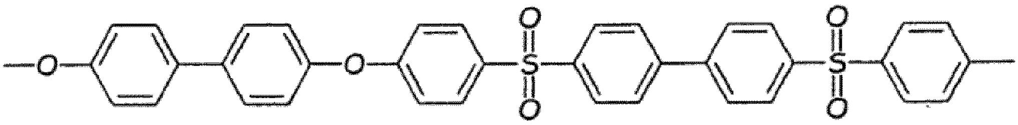

(ii)

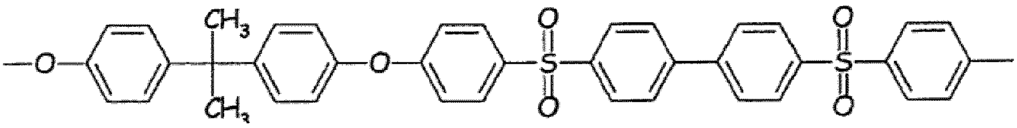

(iii)

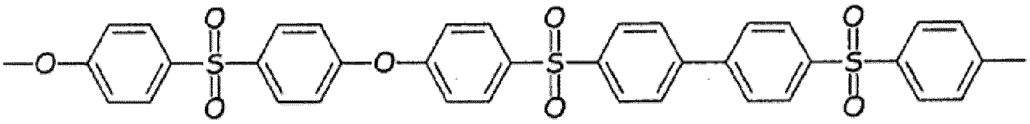

(iv)

und Mischungen davon ausgewählt sind.

2. Formkörper nach Anspruch 1, **dadurch gekennzeichnet, dass** es sich bei den Wiederholungseinheiten (R1) um Wiederholungseinheiten :

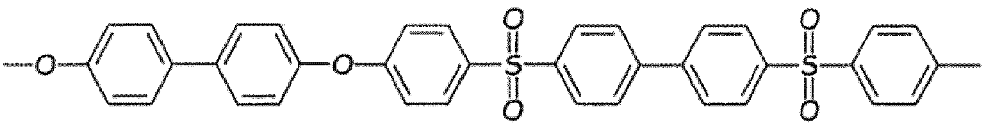

(ii)

handelt.

3. Formkörper nach Anspruch 1 oder 2, **dadurch gekennzeichnet, dass** die Polymerzusammensetzung (C) im Wesentlichen aus Polymer (P) besteht.

4. Formkörper nach Anspruch 1 oder 2, **dadurch gekennzeichnet, dass** die Polymerzusammensetzung (C) ferner mindestens ein Polymer (P2), das aus Polyetherimiden, Polysulfonen, Polyethersulfonen, Polyphenylsulfonen, Polyetherethersulfonen und Copolymeren und Mischungen davon ausgewählt ist, umfasst.

5. Formkörper nach Anspruch 1, 2 oder 4, **dadurch gekennzeichnet, dass** die Polymerzusammensetzung (C) ferner mindestens einen faserförmigen Füllstoff umfasst.

6. Formkörper nach einem der vorhergehenden Ansprüche, **dadurch gekennzeichnet, dass** er im Wesentlichen aus Polymerzusammensetzung (C) besteht.

7. Formkörper nach einem der vorhergehenden Ansprüche, **dadurch gekennzeichnet, dass** es sich dabei um einen Film handelt.

8. Formkörper nach Anspruch 7, **dadurch gekennzeichnet, dass** der Film auf ein im Wesentlichen zwei- oder dreidimensionales Substrat aufgetragen ist.

9. Formkörper nach Anspruch 7, **dadurch gekennzeichnet, dass** es sich dabei um eine Folie oder eine Platte handelt.

10. Verwendung eines Formkörpers nach einem der vorhergehenden Ansprüche bei einer Anwendung mit langfristiger thermischer Belastung über 220°C hinaus mit Ausläufern bis zu 300°C.

11. Verwendung nach Anspruch 10, wobei die Anwendung aus Kochgeschirrbeschichtungen, Backformbeschichtungen, Halbleiterbeschichtungen, Automobilbeschichtungen, technischen Beschichtungen und Luft- und Raumfahrtbeschichtungen sowie im Wesentlichen zweidimensionalen Formkörpern für andere Luft- und Raumfahrtanwendungen als Beschichtungen ausgewählt ist.

## Revendications

1. Article formé essentiellement au maximum bidimensionnel (A1) ayant une épaisseur inférieure à 500 μm et se composant d'une composition de polymères (C) comprenant plus de 80 % en poids d'au moins un polymère sulfone à haute température de transition vitreuse (P), le polymère (P) étant un polymère dont plus de 50 % en poids des unités structurales périodiques (R1) sont choisies parmi :

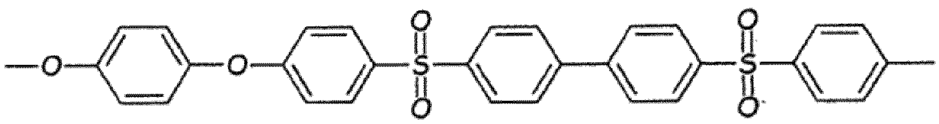

(i)

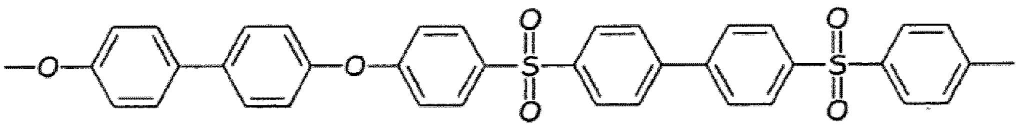

(ii)

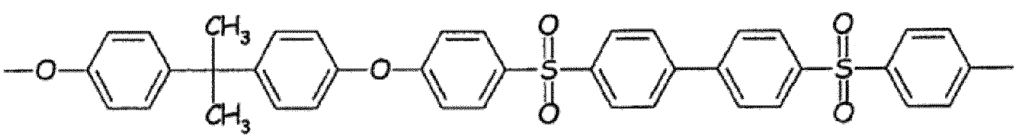

(iii)

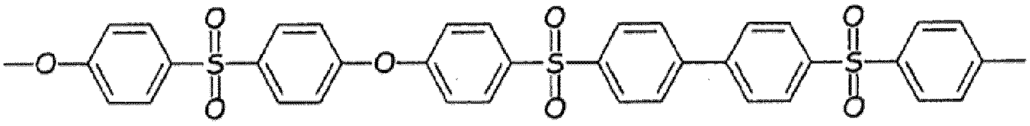

(iv)

et des mélanges de celles-ci.

2. Article formé selon la revendication 1, **caractérisé en ce que** les unités structurales périodiques (R1) sont des unités structurales périodiques :

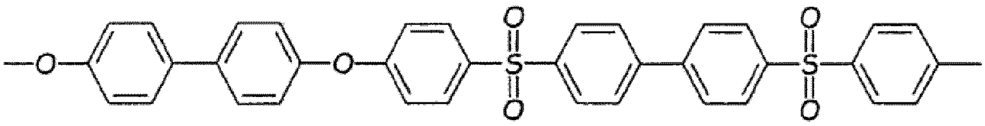

(ii).

3. Article formé selon la revendication 1 ou 2, **caractérisé en ce que** la composition de polymères (C) se compose essentiellement du polymère (P).

4. Article formé selon la revendication 1 ou 2, **caractérisé en ce que** la composition de polymères (C) comprend en outre au moins un polymère (P2) choisi parmi des polyétherimides, des polysulfones, des polyéthersulfones, des polyphénylsulfones, des polyétheréthersulfones, et des copolymères et mélanges de ceux-ci.

5. Article formé selon la revendication 1, 2 ou 4, **caractérisé en ce que** la composition de polymères (C) comprend en outre au moins une charge fibreuse.

6. Article formé selon l'une quelconque des revendications précédentes, **caractérisé en ce qu'**il se compose essentiellement de la composition de polymères (C).

7. Article formé selon l'une quelconque des revendications précédentes, **caractérisé en ce qu'**il s'agit d'un film.

8. Article formé selon la revendication 7, **caractérisé en ce que** le film est appliqué sur un substrat essentiellement bidimensionnel ou tridimensionnel.

9. Article formé selon la revendication 7, **caractérisé en ce qu'**il s'agit d'une feuille ou d'une plaque.

10. Utilisation d'un article formé selon l'une quelconque des revendications précédentes, dans une application comprenant une exposition à long terme à une température supérieure à 220°C, avec des excursions jusqu'à 300°C.

11. Utilisation selon la revendication 10, dans laquelle l'application est choisie parmi des revêtements d'ustensiles de cuisine, d'articles de cuisson, de semi-conducteurs, automobiles, industriels et aérospatiaux, ainsi que d'articles formés essentiellement bidimensionnels destinés à des applications aérospatiales autres que les revêtements.